# EUROPÄISCHE PATENTSCHRIFT

(11) **EP 1 138 582 B1**
(45) Veröffentlichungstag und Bekanntmachung des Hinweises auf die Patenterteilung: **04.05.2005**
(21) Anmeldenummer: 01103413.9
(22) Anmeldetag: 14.02.2001
(51) Int. Cl.: B62D 35/00, B62D 37/02

(54) **Anordnung zur Steuerung der Bewegung einer heckseitigen Luftleitvorrichtung an Kraftfahrzeugen**
Control device for moving rear spoilers on motor vehicles
Dispositif de commande de la position d'un aileron arrière pour véhicules à moteur

(30) Priorität: 31.03.2000 DE 10016334
(43) Veröffentlichungstag der Anmeldung: 04.10.2001
(73) Patentinhaber: Dr.Ing. h.c.F. Porsche Aktiengesellschaft, 70435 Stuttgart (DE)
(72) Erfinder: Erdelitsch, Georg, 75446 Wiernsheim-Iptingen (DE); Häcker, Walter, 71732 Tamm (DE); Jagodzinski, 71287 Leonberg (DE); Müller, Herbert, 90451 Nürnberg (DE); Preis, Johannes, 93077 Bad Abbach/Lenfeld (DE)

(56) Entgegenhaltungen:
- DE-A- 19 741 321
- US-A- 5 146 203

## Beschreibung

Die Erfindung bezieht sich auf die Anordnung zur Steuerung der Bewegung einer heckseitigen Luftleitvorrichtung am Kraftfahrzeug.

Die gattungsbildende DE 197 41 321 A1 beschreibt eine heckseitige Luftleitvorrichtung, die sich aus einem an einer heckseitigen Haube vorgesehenen Heckspoiler und einem mit diesem verbundenen Heckflügel zusammensetzt und wobei der Heckflügel mittels einer Antriebseinrichtung von einer eingefahrenen Ruhestellung in eine ausgefahrene Betriebsstellung bewegbar ist und umgekehrt. Bei dieser bekannten Einrichtung besteht die Antriebseinrichtung aus einem zentralen Getriebemotor, der über flexible Antriebswellen mit zwei den Heckflügel tragenden Teleskopausstellern verbunden ist. Jeder Teleskopaussteller besteht zumindest aus einem am Heckspoiler in Lage gehaltenen Außenrohr und einem mit dem Heckflügel verbundenen Innenrohr, welches eine lineare Verschiebebewegung ausführt. Des Weiteren ist aus der US 5,146,203 eine heckseitige Luftleitvorrichtung für Kraftfahrzeuge bekannt, mit einem Hydraulikzylinder, in welchem mit der Ansteuerung einer Pumpe ein Druck aufgebaut wird, welcher eine Veränderung der Position der Luftleitvorrichtung bewirkt.

Das erfindungsgemäße Kraftfahrzeug mit den Merkmalen des Hauptanspruchs hat den Vorteil, daß die Rückholbewegung aufgrund der integrierten Federanordnung selbsttätig erfolgt. Das Vorsehen einer hydraulischen Anordnung zur Kraftübertragung hat den Vorteil, daß sie gegenüber mechanischen Anordnungen wesentlich verschleißfester und gleichzeitig geräuschärmer ist.

Durch die Merkmale der abhängigen Ansprüche sind weitere vorteilhafte Ausgestaltungen und Verbesserungen der erfindungsgemäßen Anordnung möglich.

Das Vorsehen eines fest montierten Außenrohres und eines darin in Längsrichtung verschiebbaren Innenrohres hat den Vorteil, daß die Konstruktion einen ästhetischen Gesamteindruck in ausgefahrener Position des Heckflügels vermittelt und gleichzeitig aufgrund der sichtbaren zylindrischen Form und der glatten Oberfläche sich kein Schmutz ablagern kann, was wiederum die Lebensdauer erhöht.

Ein Bajonett-Verschluss am Teleskopaussteller zur Verbindung mit dem Heckflügel hat den Vorteil, dass die Montage sehr einfach ist und auch im Falle einer Reparatur die Verbindung ohne Probleme gelöst und anschließend wieder hergestellt werden kann.

Ein weiterer Vorteil ergibt sich durch eine Düse zwischen den beiden Hydraulikzylindern, da für den Fall einer ungleichen Bewegung so sicher gestellt ist, dass ein Ausgleich des Hydraulikmediums zwischen den Hydraulikzylindern erfolgt und die Teleskopaussteller sich gleichmäßig bewegen und damit für eine harmonische Gesamtbewegung der heckseitigen Luftleitvorrichtung sorgen.

Ausführungsbeispiele der Erfindung sind in der Zeichnung dargestellt und im folgenden näher erläutert. Es zeigen
- Fig. 1: eine perspektivische Prinzipansicht von schräg hinten auf die Luftleitvorrichtung, die Antriebseinrichtung und die Teleskopaussteller,
- Fig. 2: die Antriebseinheit mit Verbindung zu den Teleskopausstellern ohne Luftleitvorrichtung
- Fig. 3: zeigt die Antriebseinrichtung im Detail und
- Fig. 4: zeigt einen Teleskopaussteller im Detail.

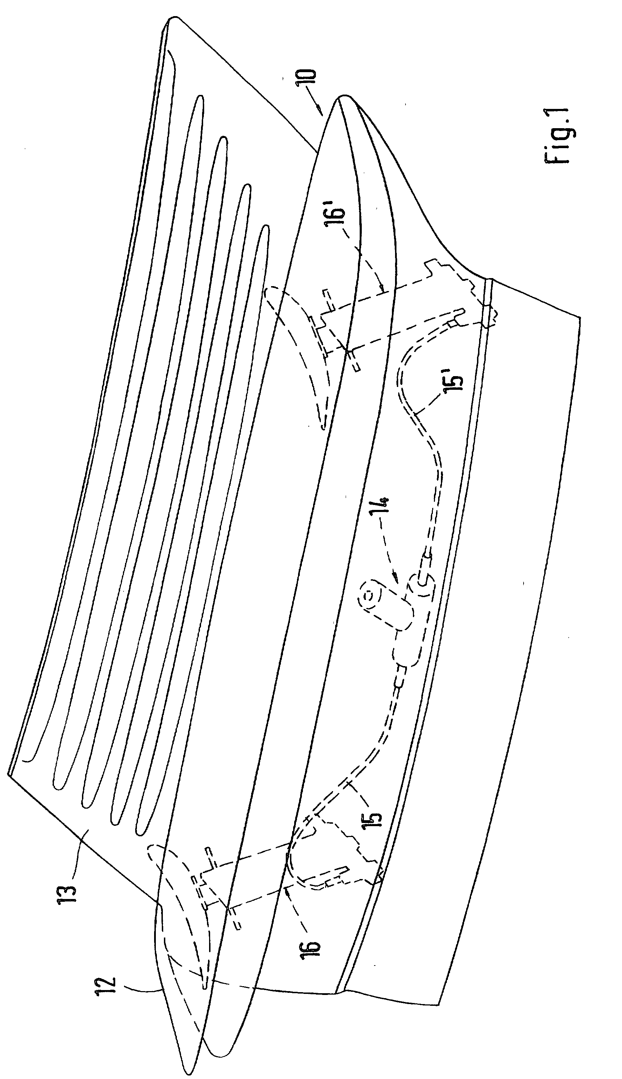

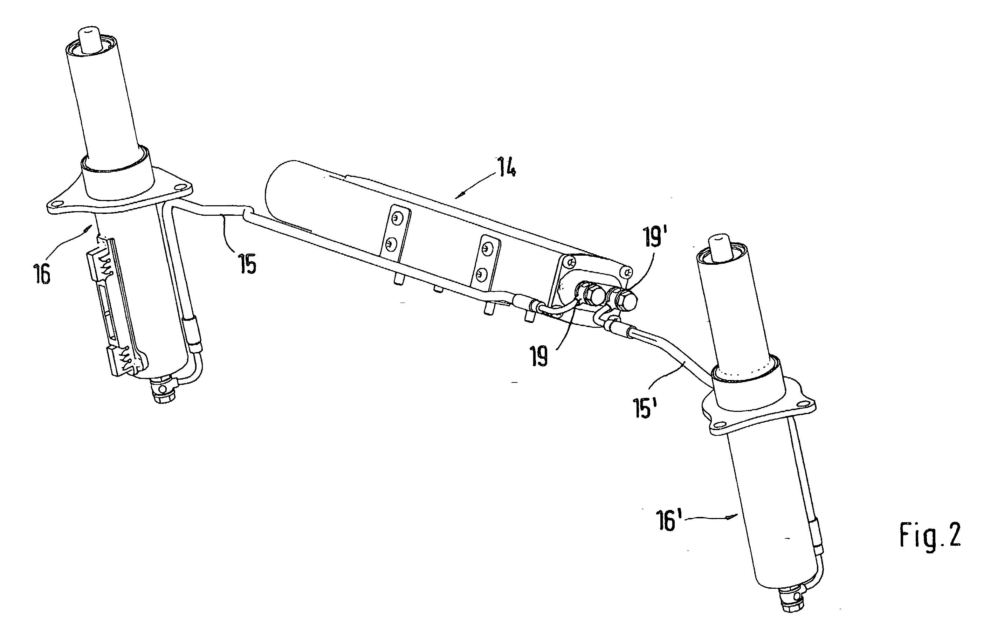

Fig. 1 zeigt eine perspektivische Prinzipansicht von schräg hinten auf eine Luftleitvorrichtung 10, die sich aus einem an der Heckoberseite angeordneten feststehenden Heckspoiler und einem mit diesem verbundenen Heckflügel 12 zusammensetzt. Der Heckspoiler 11 ist am hinteren Ende einer heckseitigen Haube 13 angeordnet. Der Heckflügel 12 läßt sich mittels einer Antriebseinrichtung 14 von einer eingefahrenen Ruhestellung in eine ausgefahrene Betriebsstellung verlagern und umgekehrt. Die Antriebseinrichtung 14 besteht aus einem Motor, welcher in Fahrzeugquerrichtung gesehen etwa mittig angeordnet ist. Von der Antriebseinrichtung 14 gehen zwei Verbindungen 15 und 15' jeweils an einen den Heckflügel 12 tragenden Teleskopaussteller 16 und 16'. In der Fig. 1 sind zwei beabstandet angeordnete Teleskopausssteller 16 und 16' zur Halterung des Heckflügels 12 vorgesehen.

Figur 2 zeigt die Antriebseinrichtung mit Verbindung zu den Teleskopausstellern ohne Luftleitvorrichtung, wobei gleiche Bezugszeichen für gleiche Bauteile verwendet wurden. Hier ist nochmals deutlich gezeigt, dass die Antriebseinrichtung 14 jeweils über Verbindungen 15 und 15' mit den Teleskopausstellern 16 und 16' verbunden ist. Dazu weist die Antriebseinheit zwei Ausgänge 19 und 19' auf, an die die Verbindungen 15 und 15' zur Bildung der hydraulischen Einheit angeschlossen sind.

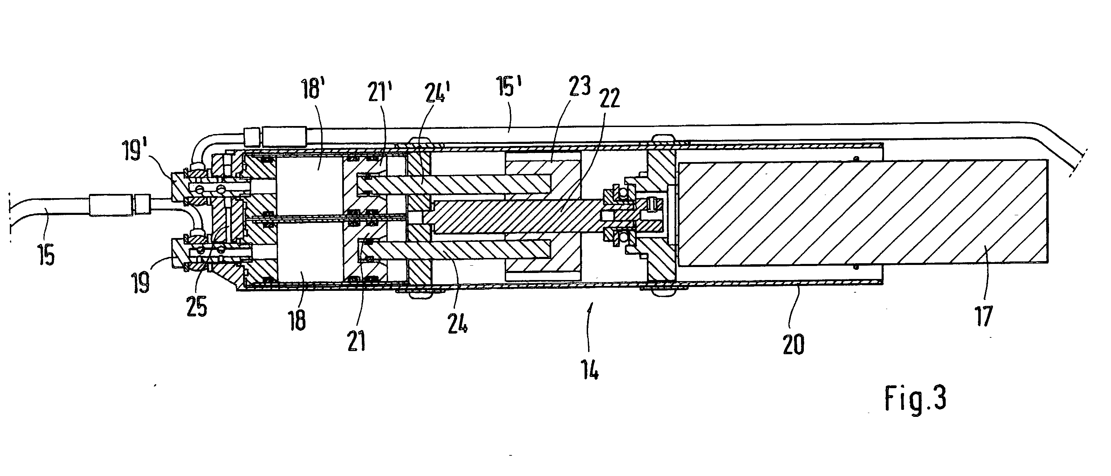

Die Wirkungsweise der Antriebseinrichtung in Verbindung mit den Teleskopausstellern soll im folgenden anhand der Fig. 2 bzw. 3 erläutert werden.

Fig. 3 zeigt die Antriebseinrichtung 14 in teilweise geschnittener Darstellung. Die Antriebseinrichtung 14 enthält einen Motor 17, welcher in einem zylindrischen Gehäuse 20 angeordnet ist. Auf der dem Motor 17 gegenüberliegenden Seite der Antriebseinrichtung 14 befinden sich zwei nebeneinanderliegende Hydraulikzylinder 18 und 18', wovon der eine Hydraulikzylinder 18 über einen Ausgang 19 an die erste Verbindung 15, die zum Teleskopaussteller 16 geführt ist, verbunden ist. In den Hydraulikzylindern 18 und 18' bewegen sich jeweils die Kolben 21 und 21', die beide über eine entsprechende konstruktive Gestaltung vom Motor 14 aus bewegt werden. Bei einer Ansteuerung des Motors 17 wird so in den Hydraulikzylindern 18 und 18' ein entsprechender Druck aufgebaut, der über die Ausgänge 19 und 19' sowie über die Verbindungen 15 und 15' eine entsprechende Bewegung der Teleskopaussteller 16 und 16' bewirkt. Die konstruktive Gestaltung zur Bewegung der Kolben 21 und 21' sieht wie folgt aus. In dem Gehäuse 20 der Antriebseinheit 14 ist eine mit dem Motor 17 fest verbundene zentral angeordnete Gewindespindel 22 vorgesehen, auf welcher ein Schieber 23 bewegbar angeordnet ist. Bei einer Ansteuerung des Motors 17 bewegt sich dieser Schieber 23 in Richtung der dem Motor 17 gegenüberliegenden Seite der Antriebseinheit 14. Von dem Schieber 23 ist jeweils zu den Kolben 21 und 21' ein Verbindungselement 24 und 24' vorgesehen, welches die Kolben in Richtung Verkleinerung des Hydraulikzylinders bewegt und so in der Kolben-Zylinder-Einheit über die hydraulische Wirkung und die Verbindung zu den Teleskopausstellern diese dann in ihre Betriebstellung bewegt werden. Die miteinander verbunden Bauteile Verbindungselement 24, 24' und Kolben 21, 21' sind mit einem vorgebbaren Spiel, welches eine Relativbewegung dieser beiden Bauteil zueinander zulässt, verbunden. An den Ausgängen 19 und 19' der Hydraulikzylinder ist eine Düse 25 vorgesehen, mittels welcher bei einer unterschiedlich starken Bewegung der Teleskopaussteller z.B. aufgrund Leckage von Hydraulikflüssigkeit in einem der Zylinder ein Ausgleich der Hydraulikflüssigkeit und damit wieder ein gleichmäßige Bewegung der beiden Teleskopaussteller 16 und 16' sichergestellt wird, so dass ein harmonischer Bewegungsablauf des Heckflügels gegeben ist. Die Verbindung von Verbindungselement und Kolben mit einem vorgebbaren Spiel ermöglicht es, beim Zurückfahren des Heckflügels in seine Ruheposition das System vollkommen druckfrei zu machen, wodurch sich ein spaltfreier Sitz des Heckflügels am Heckspoiler ergibt.

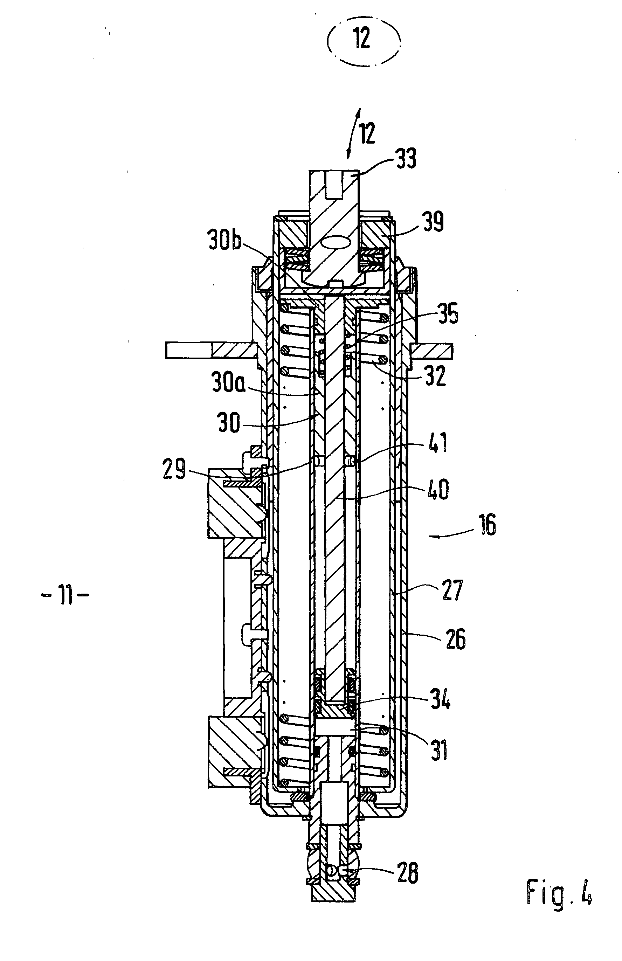

Fig. 4 zeigt einen Teleskopaussteller 16 in teilweise geschnittener Darstellung, so dass sein Aufbau und seine Wirkungsweise im folgenden anhand der Figur erläutert werden kann. Der Teleskopaussteller umfasst ein feststehendes Außenrohr 26 und ein in Höhenrichtung verschiebbares Innenrohr 27, wobei das feststehende Außenrohr 26 am feststehenden Heckspoiler befestigt ist und das verschiebbare Innenrohr 27 mit dem Heckflügel 12 verbunden ist. Die prinzipielle Funktion des Teleskopausstellers ist der bereits eingangs zitierten Druckschrift DE 197 43 321 A1 entnehmbar. Bei einer Ansteuerung der Luftleitvorrichtung zum Ausfahren des Heckflügels wird das Innenrohr 27 aus dem feststehenden Außenrohr 26 herausbewegt. Bei der erfindungsgemäßen Anordnung ist an der Seite des Teleskopausstellers 16, welcher auf der dem Heckspoiler zugewandten Seite liegt, ein Eingang 28 vorgesehen, an welchen die hier nicht dargestellte Verbindung 15 zur Übertragung der Hydraulikflüssigkeit geführt. In dem verschiebbaren Innenrohr 27 befindet sich ein weiteres zentral angeordnetes Innenrohr 29 kleineren Durchmessers, welches analog dem Außenrohr fest verankert ist. Das verschiebbare Innenrohr 27 hat im wesentlichen die Form einer Hülse mit einem verschlossenen Boden auf der dem Heckspoiler zugewandten Seite. Lediglich durch eine Öffnung am verschlossenen Boden ragt das zentral angeordnete Innenrohr 26 hindurch, so dass das verschiebbare Innenrohr 27 bei einem Ausfahren des Heckflügels auf dem fest montierten, zentral angeordneten Innenrohr 29 entlangläuft. Das verschiebbare Innenrohr 27 weist ein Abschluss-Stück 39 auf, welches mittig mit einer Schubstange 40, die wiederum in dem fest montierten, zentral angeordneten Innenrohr 29 sitzt, verbunden ist. Außerdem ist in dem Innenrohr 29 zentral eine stempelförmige Anordnung 30 enthalten, die bei einer Bewegung des beweglich angeordneten Innenrohres 27 zum Ausfahren der Teleskopaussteller 16 bzw. 16' nicht mitbewegt wird. Am dem Heckspoiler zugewandte Ende der Schubstange 40 ist ein Abschluss-Stück 34 so angeordnet, dass ein Hohlraum 31 entsteht, welchen zum hydraulischen System gehört. Bei einer Ansteuerung des Motors der Antriebseinheit wird in diesem Hohlraum 31 Hydraulikflüssigkeit hineingepumpt und über diesen Druck die Schubstange 40 mit dem Verschluss-Stück 39 hydraulisch so bewegt, dass er durch die feste Verbindung zum Innenrohr 27 eine Verschiebung des Innenrohrs 27 aus dem Außenrohr 26 heraus erfolgt. Zwischen dem Innenrohr 27 und dem kleineren Innenrohr 29 ist eine, hier nur teilweise dargestellte, Feder 32 angeordnet. Beim Herausbewegen der verschiebbaren Einheit nimmt der verschlossene Boden des verschiebbaren Innenrohres 27 die Feder 32 mit und spannt diese entgegen ihrer Federkraft während der Bewegung des Heckflügels 12. Die gespannte Feder bewirkt ein Zurückholen der verschiebbaren Einheit in Zusammenwirkung mit einem Druckabbau beim Zurückfahren des Schiebers 23 durch den Motor 17. Die Feder 32 unterstützt damit die Rückbewegung der Kolben in den Hydraulikzylindern durch ihren Entspannungsvorgang. Am heckflügelseitigen Ende des Teleskopausstellers ist zur Befestigung des Teleskopausstellers am Heckflügel ein Bajonettverschluß 33 vorgesehen, welcher eine sehr einfache Montage des Teleskopausstellers am Heckflügel erlaubt.

Im folgenden soll die Realisierung des Ausgleichs der Hydraulikflüssigkeit beschrieben werden, der über die zu Figur 3 erwähnte Düse 25 der Antriebseinheit 14 erfolgt. Prinzipiell wird über diese Düse immer ein Ausgleich von Hydraulikflüssigkeit stattfinden, wenn in einem der beiden hydraulischen Systeme ein größerer Druck herrscht als in dem anderen. Es hat sich gezeigt, dass der Ausgleich am effektivsten ist, wenn das die Teleskopaussteller ausgefahren sind und damit in den Hydraulikzylindern ein entsprechend großer Druck herrscht. Zur Verstärkung dieses Effektes ist bei beiden Teleskopausstellern innerhalb des kleineren Innenrohres 29 im Bereich der stempelförmigen Anordnung 30 eine zweite Feder 35 vorgesehen. Die stempelförmige Anordnung 30 ist im wesentlichen aus zwei Teilen 30a und 30b, zwischen denen sich die zweite Feder 35 befindet, zusammengesetzt. Bei einem Druckaufbau durch entsprechende Ansteuerung des Motors 17 wird Hydraulikflüssigkeit in den Hohlraum 31 hineingepumpt und so die Schubstange 40 mit ihrem Abschluss-Stück 34 in Richtung stempelförmige Anordnung 30 bewegt bis das Abschluss-Stück 34 die stempelförmige Anordnung 30 erreicht hat. Dies kann beispielsweise über einen entsprechend angeordneten Endlagenschalter 41 erkannt werden. Dieser Endlagenschalter ist in der Figur 4 an der stempelförmigen Anordnung und zwar auf der dem Abschluss-Stück 34 zugewandten Seite angeordnet. Denkbar ist aber auch an Anbau auf dem sich bewegenden Abschluss-Stück 34. Wenn der Heckflügel soweit ausgefahren ist, dass diese Position erreicht ist, wird der Teile 30a der stempelförmigen Anordnung 30 gegen die Federkraft der Feder 35 an den Teil 30b gedrückt. Durch die Feder 35 nimmt der Druck in hydraulischen System zu und für den Fall, dass einer der beiden Teleskopaussteller weiter ausgefahren ist als der andere, dann ist der Druck in diesem hydraulischen System größer und es erfolgt über die Düse 25 ein entsprechender Ausgleich.

Zur Überwachung der Bewegung des Teleskopaussteller sind zwischen Außenrohr 26 und Innenrohr 27 Schalter vorgesehen, die jeweils die Position des Innenrohres erfassen. Diese Schalter zur Steuerung der Bewegung der Teleskopaussteller können sowohl jeweils in beiden Teleskopausstellern als auch nur in einem Teleskopaussteller vorgesehen werden. Sinnvollerweise kann ebenfalls eine Überwachung der ausgeführten Ausgleichsvorgänge erfolgen und bei einer unverhältnismäßig hohen Anzahl von Ausgleichsvorgängen auf einen Fehler im System geschlossen werden, der dann dem Fahrer optisch und/oder akustisch angezeigt werden kann.

Diese hydraulische Bewegung des Heckflügels der Luftleitvorrichtung zeichnet sich durch ihre einfache Konstruktion, die frei von mechanischen Verschleißteilen ist, aus.

Denkbar ist neben der Verwendung von Hydraulikflüssigkeit auch die Verwendung jedes anderen geeigneten Mediums z.B. Kühlflüssigkeit

## Patentansprüche

1. Kraftfahrzeug mit einer bewegbaren heckseitigen Luftleitvorrichtung (10), wobei die heckseitige Luftleitvorrichtung sich aus einem an einer heckseitigen Haube vorgesehenen Heckspoiler und einem mit diesem verbundenen Heckflügel (12) zusammensetzt und der Heckflügel (12) von einer eingefahrenen Ruhestellung in eine ausgefahrene Betriebsstellung bewegbar ist und umkehrt, wobei das Fahrzeug, zur Steuerung der Bewegungen des Heckflügels, eine Antriebseinrichtung (14), mindestens zwei Teleskopaussteller (16, 16') und je eine Verbindung (15, 15') zwischen Antriebseinrichtung und Teleskopaussteller umfasst und wobei die Antriebseinrichtung (14) einen Motor (17) enthält, wobei der Teleskopaussteller ein am Heckspoiler in Lage gehaltenes Außenrohr (26) und ein mit dem Heckflügel (12) verbundenes Innenrohr (27) aufweist und das Innenrohr (27) des Teleskopausstellers im Außenrohr (26) in Längsrichtung verschoben wird, **dadurch gekennzeichnet, dass** in dem Innenrohr ein weiteres vom Durchmesser kleineres und mit dem Außenrohr fest verbundenes nicht bewegbares Innenrohr (29) enthalten ist und zwischen der Außenwand des kleineren Innenrohrs (29) und der Innenwand des ersten Innenrohrs (27) eine Feder (32) angeordnet ist und wobei in der Antriebseinrichtung (14) mindestens ein Hydraulikzylinder (18, 18') angeordnet ist, und dass bei einer Ansteuerung des Motors (17) in dem mindestens einen Hydraulikzylinder (18, 18') ein Druck aufgebaut wird, der an die Teleskopaussteller (16, 16') übertragbar ist und bewirkt, dass der Heckflügel (12) gegen eine Federkraft in seine Betriebsposition bewegt wird, so dass bei einer Bewegung des Innenrohrs die Feder (32) gespannt oder entspannt wird.

2. Kraftfahrzeug nach Anspruch 1, **dadurch gekennzeichnet, dass** das verschiebbare Innenrohr an seinem dem Heckflügel zugewandten Ende einen Bajonett-Verschluss (33) aufweist, mittels dessen der Teleskopaussteller am Heckflügel befestigbar ist.

3. Kraftfahrzeug nach Anspruch 1, **dadurch gekennzeichnet, dass** die Antriebseinrichtung (14) in Fahrzeugquerrichtung gesehen etwa mittig angeordnet ist und dass die Antriebseinrichtung (14) soviele Ausgänge (19, 19') enthält, wie Teleskopaussteller (16, 16') in der Anordnung enthalten sind, und dass zwischen den Ausgängen (19, 19') und den Teleskopausstellern je eine hydraulische Verbindung (15, 15') angeordnet ist.

4. Kraftfahrzeug nach einen der vorherigen Ansprüche, **dadurch gekennzeichnet, dass** für jeden Teleskopaussteller jeweils ein Hydraulikzylinder vorhanden ist und die Hydraulikzylinder in unmittelbarer Nähe ihrer Ausgänge über eine Düse (25) miteinander verbunden sind.

## Claims

1. A motor vehicle with a movable rear air deflector (10), wherein the rear air deflector comprises a rear spoiler, provided on a rear lid, and a rear flap (12) connected to the rear spoiler, and the rear flap (12) is movable from a retracted rest position into an extended operating position and vice versa, wherein the vehicle, in order to control the movements of the rear flap, comprises a drive device (14), at least two telescopic actuators (16, 16') and a respective connection (15, 15') between the drive device and each telescopic actuator, wherein the drive device contains a motor (17), and wherein the telescopic actuator has an outer tube (26) held in position on the rear spoiler, and an inner tube (27) connected to the rear flap (12), and the inner tube (27) of the telescopic actuator is displaced longitudinally in the outer tube (26), **characterised in that** a further, non-movable, inner tube (29), which is of smaller diameter and fixedly connected to the outer tube, is contained in the inner tube, and a spring (32) is arranged between the outer wall of the smaller inner tube (29) and the inner wall of the first inner tube (27), and at least one hydraulic cylinder (18, 18') is arranged in the drive device (14), and **in that**, when the motor (17) is activated, a pressure is built up in the at least one hydraulic cylinder (18, 18'), which pressure is transmittable to the telescopic actuators (16, 16') and causes the rear flap (12) to move into its operating position against a spring force, with the result that the spring (32) is either tensioned or relaxed during movement of the inner tube.

2. A motor vehicle according to claim 1, **characterised in that** the displaceable inner tube has, on its end facing the rear flap, a bayonet fixing (33), by means of which the telescopic actuator is fixable to the rear flap.

3. A motor vehicle according to claim 1, **characterised in that** the drive device (14) is arranged substantially centrally when viewed in the transverse direction of the vehicle, and **in that** the drive device (14) contains as many outputs (19, 19') as telescopic actuators (16, 16') are contained in the arrangement, and **in that** a respective hydraulic connection (15, 15') is arranged between the outputs (19, 19') and the telescopic actuators.

4. A motor vehicle according to any one of the preceding claims, **characterised in that** a hydraulic cylinder is provided for each telescopic adjuster, and the hydraulic cylinders are connected to one another by a nozzle (25) in the immediate vicinity of their outputs.

## Revendications

1. Véhicule ayant un dispositif de déflexion à l'arrière (10), où le dispositif de déflexion à l'arrière se compose d'un déflecteur arrière prévu sur un capot arrière et d'une aileron arrière (12) relié à celui-ci et l'aileron arrière (12) peut être déplacé d'une position de repos rétractée à une position de service déployée et inversement, où le véhicule comprend, aux fins de la commande des mouvements de l'aileron arrière, un mécanisme d'entraînement (14), au moins deux montants télescopiques (16, 16') et respectivement une liaison (15, 15') entre le mécanisme d'entraînement et un montant télescopique, et où le mécanisme d'entraînement (14) comprend un moteur (17), où le montant télescopique présente un tube extérieur (26) maintenu en position sur le déflecteur arrière et un tube intérieur (27) relié à l'aileron arrière (12) et le tube intérieur (27) du montant télescopique coulisse dans le tube extérieur (26) dans la direction longitudinale, **caractérisé en ce qu'**un tube intérieur supplémentaire (29) d'un diamètre plus petit et relié de façon fixe avec le tube extérieur est contenu dans le tube intérieur et un ressort (32) est disposé entre la paroi extérieure du plus petit tube intérieur (29) et la paroi intérieure du premier tube intérieur (27), où au moins un vérin hydraulique (18, 18') est dipsosé dans le mécanisme d'entraînement (14), et **en ce que**, lors d'une commande du moteur (17), il s'établit dans le vérin hydraulique au moins au nombre d'un (18, 18') une pression qui peut être transmise aux montants télescopiques (16, 16') et a pour effet que l'aileron arrière (12) est déplacée contre une force de ressort dans sa position de service, de telle sorte que le ressort (32) est tendu ou détendu lors d'un mouvement du tube intérieur.

2. Véhicule selon la revendication 1, **caractérisé en ce que** le tube intérieur coulissant présente sur son extrémité dirigée vers l'aileron arrière une fermeture à baïonnette (33) au moyen de laquelle le montant télescopique peut être fixé sur l'aileron arrière.

3. Véhicule selon la revendication 1, **caractérisé en ce que** le mécanisme d'entraînement (14) est disposé approximativement au centre par rapport à la direction transversale du véhicule, **en ce que** le mécanisme d'entraînement (14) comprend autant de sorties (19, 19') que le dispositif contient de montants télescopiques (16, 16'), et **en ce qu'**une liaison hydraulique (15, 15') est chaque fois disposée entre les sorties (19, 19') et les montants télescopiques.

4. Véhicule selon l'une quelconque des revendications précédentes, **caractérisé en ce qu'**un vérin hydraulique respectif est prévu pour chaque montant télescopique et les vérins hydrauliques sont reliés entre eux à proximité immédiate de leurs sorties par le biais d'une buse (25).
